# EUROPEAN PATENT APPLICATION

(11) **EP 2 108 860 A2**
(43) Date of publication of application: **14.10.2009**
(21) Application number: 09157808.8
(22) Date of filing: 10.04.2009
(51) Int. Cl.: F16G 3/02

(54) **Toothed belt**

(30) Priority: 11.04.2008 IT TO20080283
(71) Applicant: Megadyne S. & D. S.r.l., Robassomero (IT)
(72) Inventor: Sereno Regis, Flavio, 10083 Favria (IT)
(74) Representative: Jorio, Paolo

(57) **Abstract**

A toothed belt (1) has two end portions (10,11) that are joined together and define respective longitudinal tongues (12,13), which alternate with seats (14,15) engaged by the tongues (13,12) of the other portion (11,10); the tongues (12,13) are joined together by transverse pins (24); at least one of the two end portions (10,11) has at least two tongues of different lengths.

## Description

The present invention relates to a toothed belt.

As is known, toothed belts comprise a body made of an elastomeric material and are provided with a back surface and a front toothing, consisting of a plurality of teeth arranged parallel to one another and transversely with respect to the longitudinal direction of the belt. Longitudinal threadlike inserts, generally referred to as "cords", are embedded in the elastomeric body, arranged along the back surface.

The belts of the type described above are used, in particular, in conveyor systems, where the belt is used to carry objects placed directly on the back thereof.

For this type of application, toothed belts are made by producing a toothed strip (referred to as an "open-end" belt) and subsequently joining the ends of said belt to create a loop and thus obtain the final shape of the belt.

To join the ends, British patent GB1422841 describes two end portions provided with respective longitudinal tongues, which engage corresponding seats in the other end portion, so as to form a male/female-type connection, and transverse pins arranged in correspondence with the teeth and adjacent to the cords pass through said tongues.

However, with the joint of the type described above a relatively marked longitudinal elongation occurs locally in the point at which two tongues of one of the end portions terminate together, due to the break in the cords and discontinuity of the elastomeric material. Said local elongation consists of a slight detachment in the longitudinal direction of the ends of the tongues from the bottom of the respective seats. Thus, considering the tooth close to the ends of the two tongues, said tooth comprises three portions that are part of the two end portions, but which are not perfectly aligned, resulting in anomalous wear on the joint, and eventually causing the system to break.

The purpose of the present invention is to provide a toothed belt, which overcomes or limits the drawbacks described above in a simple and inexpensive manner.

According to the present invention there is provided a toothed belt extending in a longitudinal direction and comprising:
- a longitudinal back portion and a plurality of transverse teeth;
- a plurality of longitudinal reinforcement cords embedded in said back portion;
- a joint comprising:
   a) two end portions comprising respective longitudinal tongues alternating with seats, which are engaged by the tongues of the other end portion;
   b) a plurality of transverse pins extending through said tongues;
   **characterized in that** at least one of said end portions comprises at least two tongues having ends that are longitudinally spaced with respect to one another, so as to define one tongue end portion that protrudes with respect to the other of said two tongues, and in that said tongue end portion is engaged by at least one of said transverse pins.

The present invention will now be described with reference to the accompanying drawings, illustrating a non-limiting embodiment thereof, in which:
- figure 1 is a perspective view, with parts removed for the sake of clarity, of a preferred embodiment of the toothed belt according to the present invention;
- figure 2 is an exploded view of the toothed belt of figure 1; and
- figure 3 is a plan view comparing a toothed belt according to the present invention and a toothed belt known in the prior art.

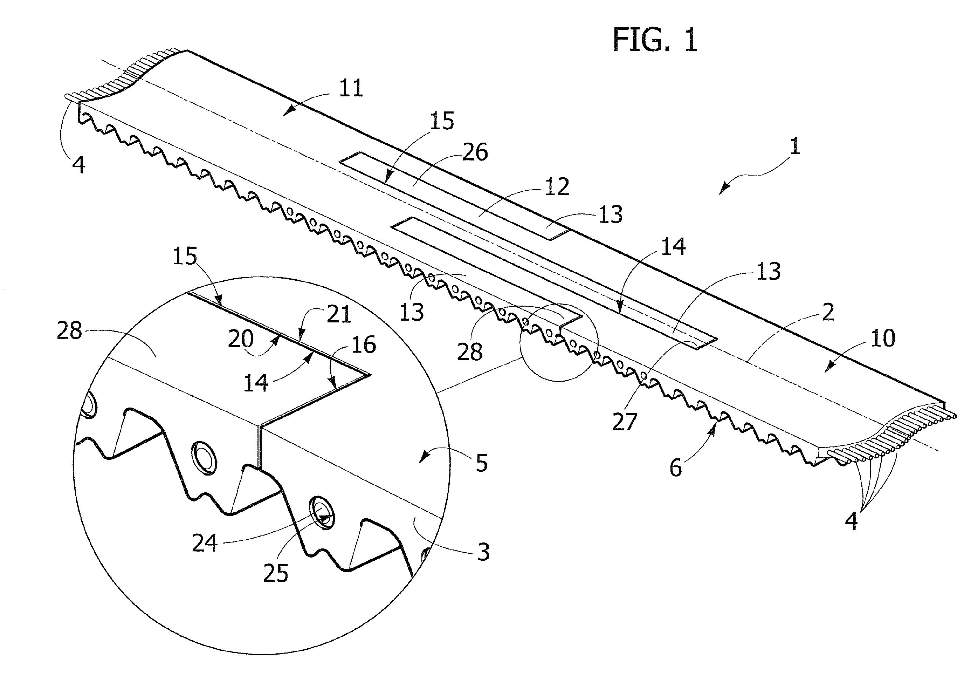

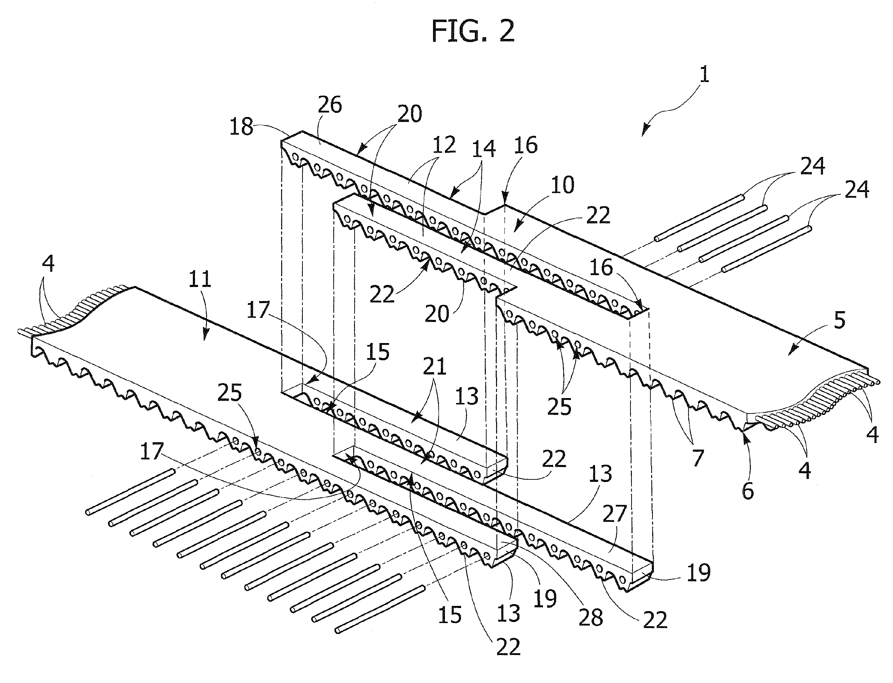

In figures 1 and 2, designated as a whole by number 1 is a toothed belt (partially illustrated) arranged to form a loop extending in a longitudinal direction 2 and wound, in use, around one or more pulleys (not illustrated).

The belt 1 comprises a longitudinal portion 3 made of elastomeric material, in which a plurality of longitudinal threadlike reinforcing inserts 4, generally referred to as cords, are embedded.

The belt 1 has a back surface 5, defined by the portion 3, and a toothed front surface 6, which cooperates, in use, with the drive and driven pulleys about which the belt 1 is wound. The toothed surface 6 is shaped with a standard profile in the direction 2 and is defined by a series of parallel teeth 7 arranged transversely to the direction 2. Preferably, the teeth 7 are formed in one piece with the portion 3.

The belt 1 is made for example using an extrusion process, to form a toothed belt that is then die cut in order to form two end portions 10,11. The portions 10, 11 are then joined together in order to create a loop and obtain the final shape of the belt.

The portions 10,11 are configured so as to define a male/female-type connection and comprise respective longitudinal tongues, indicated respectively by reference numbers 12 and 13. The tongues 12 and 13 are preferably rectangular in shape, when seen in plan view, i.e. in the direction orthogonal to the face 5, and alternate, crosswise, with seats 14 and, respectively 15, having a shape that is substantially complementary to that of the tongues 13 and, respectively, 12 and are completely engaged by the tongues 13 and, respectively, 12.

In other words, the seats 14,15 are defined by respective base surfaces 16,17, which face the tips or ends 19,18 of the teeth 13,12, and by respective side surfaces 20,21, which are preferably parallel and define the longitudinal sides of the tongues 12,13.

Thus, in the joint defined by the portions 10 and 11, each tooth 7 is divided into tooth portions 22 (figure 2) arranged side by side in a transverse direction.

Preferably, the surfaces 16, 17, 20 and 21 are orthogonal with respect to the face 5 so as to facilitate the insertion of the tongues 12,13 into the respective seats 15,14 and the relative positioning of the tooth portions 22, when the portions 10,11 are joined.

The joint also comprises a plurality of pins 24 engaging respective holes 25, which are parallel to the teeth 7 and are obtained in the tooth portions 22 centrally with respect to the slanting sides which transmit the motion with the pulleys and spaced with respect to the cords 4. The pins 24 are fixed in the holes 25, and therefore tend to hold the tooth portions 22 of each tooth 7 in relatively fixed and aligned positions and transmit the tensile force between the portions 10,11. The pins 24 are preferably formed in one piece and are interference fitted into the holes 25, by means of a process which is not described in detail.

The two tongues 12 have different lengths, i.e. the ends 18 are longitudinally spaced. Thus, one of the two tongues 12 comprises one end portion 26 that protrudes with respect to the other tongue 12 and through which at least one of the two pins 24 is inserted. The same characteristic also applies to the portion 11, so that the longer tongues 13 comprise end portions 27 and 28 that protrude longitudinally with respect to the shorter tongues 13.

As the shape of the seats 14,15 substantially complements that of the tongues 13,12, the surfaces 16 are also longitudinally spaced with respect to one another and the surfaces 17 are longitudinally spaced with respect to one another.

Preferably, the portions 26 and 27 protrude by a length that is sufficient to include at least three teeth 7 or, in the same way, three pins 24; moreover, the tongues 12,13 are dimensioned so as to preferably include equal numbers of cords 4.

Thanks to the different length of the tongues 12,13, the local elongation in correspondence with the ends 18,19 of the tongues 12,13 is limited.

With an end portion in which all the tongues are of the same length, the ends of said tongues would be aligned with respect to one another, with a greater local discontinuity and with a higher number of cords 4 broken locally with respect to the portions of the ends 18,19. In the cross-sections in correspondence with each of the ends 18,19, the break in material and in the cords 4 is limited to the width of a single tongue.

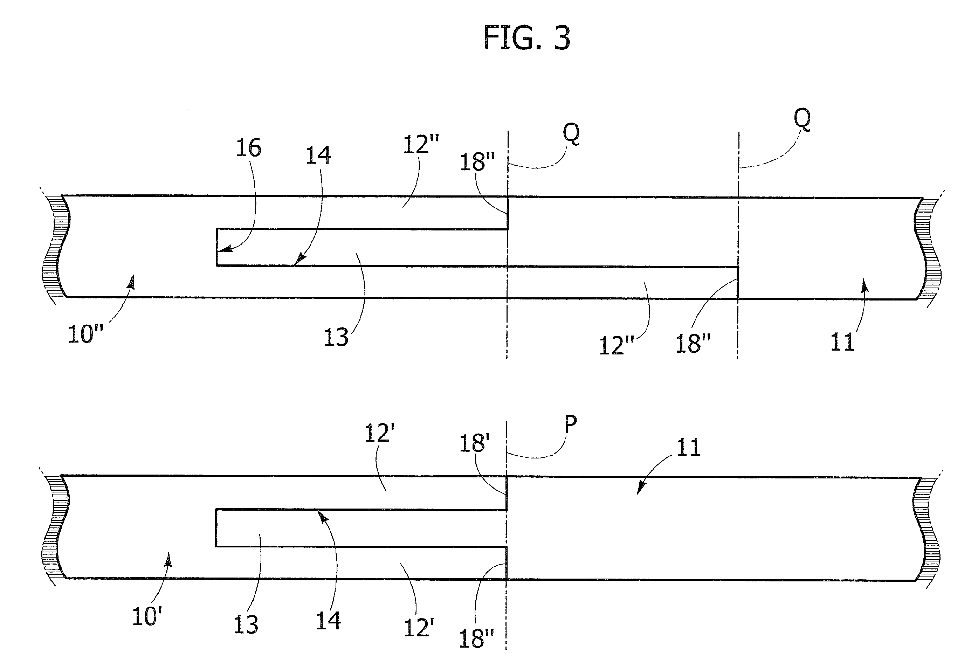

For example, consider the situation in figure 3, in which the portion 11 comprises a single intermediate tongue 13 which engages a single central seat 14 of the other end portion, which is indicated by number 10' for the case of a prior art toothed belt and by 10" for the case of a toothed belt according to the present invention. When the cross-section in a plane P in which both the ends 18' of the lateral tongues 12' that are the same length as the portion 10' lie is compared with the cross-section in each plane Q in which each of the ends 18'' of lateral tongues 12'' having a different length from the portion 10'' lie, it is apparent that the area of discontinuity of the material and number of broken cords 4 in the former are twice those in the latter. Thus, in correspondence with each plane Q the tensile force is distributed over a larger area and over a greater number of cords 4 and, thus, generates less stress, compared to that in correspondence with the plane P: thus, there is less local elongation in correspondence with the planes Q.

By limiting the local elongation in correspondence with the ends 18,19, the tooth portions 22 that are close to the ends 18,19 remain substantially aligned in the transverse direction, improving the performance of the belt 1 and reducing its wear compared to conventional mechanical splicing solutions.

Note that the number of pins 24 that engage the portions 26,27,28 and the number of cords 4 for each tongue 12,13 also contribute to achieving an ideal distribution of the tensile force between the portions 10,11.

Lastly, from the above description, it is clear that modifications and variations may be made to the belt 1 described herein without departing from the scope of the present invention as set forth in the appended claims.

In particular, the belt 1 could be coated along the surface 6 and/or the surface 5; and/or the tongues 12,13 could have a different shape from that illustrated, for example they could be triangular or trapezoidal in shape, and/or they could differ in number compared to those indicated by way of example; and/or the holes 25 could be provided with an internal coating, and/or guiding elements at the lateral ends for fitting the pins 24; and/or the shape of the teeth 7 could differ from that illustrated.

## Claims

1. Toothed belt (1) extending in a longitudinal direction (2) and comprising:
- a longitudinal back portion (3) and a plurality of transverse teeth (7);
- a plurality of longitudinal reinforcement cords (4) embedded in said back portion (3);
- a joint comprising:
a) two end portions (10,11) comprising respective longitudinal tongues (12,13) alternating with seats (14,15), which are engaged by the tongue (13,12) of the other end portion (11,10);
b) a plurality of transverse pins (24) extending through said tongues (12,13);
**characterized in that** at least one of said end portions (10) comprises at least two tongues (12) having ends (18) that are longitudinally spaced with respect to one another, so as to define one tongue end portion (26) that protrudes with respect to the other of said two tongues, and **in that** said tongue end portion (26) is engaged by at least one of said transverse pins (24).

2. Belt according to claim 1, **characterized in that,** in each of said end portions (10,11), the tongues (12,13) have ends that are longitudinally spaced with respect to one another.

3. Belt according to claim 1 or 2, **characterized in that** said tongues (12,13) are of lengths such as to include respective whole numbers of teeth (7).

4. Belt according to any one of the previous claims, **characterized in that** said tongue end portion (26) includes at least two teeth (7) or is engaged by at least two transverse pins (24).

5. Belt according to any one of the previous claims, **characterized in that** said transverse pins (24) are spaced with respect to said reinforcement cords (4).

6. Belt according to any one of the previous claims, **characterized in that** said tongues (12,13) are substantially rectangular in shape and include equal numbers of reinforcement cords (4).
